# EUROPÄISCHE PATENTANMELDUNG

(11) **EP 2 597 287 A1**
(43) Veröffentlichungstag der Anmeldung: **29.05.2013**
(21) Anmeldenummer: 11190938.8
(22) Anmeldetag: 28.11.2011
(51) Int. Cl.: F02C 9/18, F02C 9/40, F02C 6/08, F02C 7/18

(54) **Verfahren zum Betrieb einer stationären Gasturbine mit einem niederkalorischen oder mittelkalorischen Brennstoff sowie stationäre Gasturbine dafür**

(71) Anmelder: Siemens Aktiengesellschaft, 80333 München (DE)
(72) Erfinder: Huth, Michael, 45239 Essen (DE)

(57) **Zusammenfassung**

Die Erfindung betrifft ein Verfahren zum Betrieb einer stationären Gasturbine (10) mit einem niederkalorischen Brennstoff und/oder mittelkalorischen Brennstoff, vorzugsweise Synthesegas, wobei die Gasturbine ein Sekundärluftsystem mit mindestens zwei Kühlluftstufen (44d,44c) zur offenen Kühlung von Turbinenbauteilen aufweist. Um eine Gasturbine anzugeben, die weitestgehend auf einer für hochkalorische Brennstoffe konstruierten Gasturbine basiert, und dennoch möglichst geringe konstruktive Änderungen gegenüber dieser aufweist, wird vorgeschlagen, dass während des Nenn- und Teillastbetriebs der Gasturbine den Kühlluftstufen Kühlluft mit im Wesentlichen gleichen Druck zugeführt wird. Die stationäre Gasturbine kennzeichnet sich dadurch, dass zumindest einer der Brenner (22) eine mittelkalorische oder niederkalorische Brennstoffstufe aufweist und die mindestens zwei Kühlluftstufen mit einer gemeinsamen Kühlluftmenge dauerhaft - nicht umschaltbar - miteinander verbunden sind.

## Beschreibung

Die Erfindung betrifft ein Verfahren zum Betrieb einer stationären Gasturbine mit einem niederkalorischen Brennstoff und/oder mittelkalorischen Brennstoff, vorzugsweise Synthesegas, wobei die Gasturbine ein Sekundärluftsystem mit mindestens zwei Kühlluftstufen zur offenen Kühlung von Turbinenbauteilen aufweist.

Weiter betrifft die Erfindung eine stationäre Gasturbine umfassend einen Verdichter, eine Brennkammer oder mehrere Brennkammern mit jeweils einem oder mehreren Brennern, eine Turbine und ein mindestens zwei Kühlluftstufen umfassendes Sekundärluftsystem zur offenen Kühlung von Turbinenbauteilen.

Aus der EP 1 120 559 A1 ist ein Verfahren zum Betrieb einer Gasturbine bekannt, bei dem die in der Turbine angeordneten Bauteile mit Kühlluft versorgt werden. Gemäß den darin vorgeschlagenen Verfahren wird angestrebt, eine besonders kleine Menge an Kühlluft einzusetzen und in den Heißgaskanal auszublasen, um den Wirkungsgrad der Gasturbine insgesamt hoch zu halten. Um die Kühlluftmenge zu begrenzen ist vorgesehen, dass der Druckunterschied zwischen dem Druck des Heißgases an einer lokalen Stelle und dem Druck der an dieser Stelle einströmenden Kühlluft stets vergleichsweise klein ist. Dieser stets geringfügige Druckunterschied, im Englischen "back flow margin" genannt, wird gemäß der EP 1 120 559 A1 dadurch erreicht, dass für jede Kühlluftstufe ein fester Prozentsatz des Drucks der Verdichterendluft als Kühlluftversorgungsdruck für die einzelne betreffende Kühlluftstufe eingestellt wird.

Der Verdichterenddruck wird bekanntermaßen durch die sogenannte Schluckfähigkeit der ersten Turbinenstufe in Verbindung mit der Menge der vom Verdichter angesaugten Luft bestimmt. Eine Reduktion der angesaugten Luftmenge führt bekanntermaßen wegen des geringeren Druckverhältnisses zu einer höheren Abgastemperatur bei gleicher Eintrittstemperatur. Bevorzugtermaßen wird diese Art der Prozessbeeinflussung insbesondere im Teillastbereich eingesetzt. Insofern müssen Ansaugmenge des Verdichters und Schluckfähigkeit der Turbineneinheit für einen guten Prozesswirkungsgrad aufeinander abgestimmt werden.

Die nachfolgend verwendeten Begriffe "niederkalorisch" (2 MJ/kg - 4 MJ/kg), "mittelkalorisch" (10 MJ/kg - 15 MJ/kg), und "hochkalorisch" (30-50MJ/kg) zur Definition der Heizwerte der Brennstoffe wurden dem Buch "Stationäre Gasturbinen" von Christoph Lechner und Jörg Seumer (HRSG), Ausgabe 2003, Seiten 955 und 956 entnommen.

Weiter ist bekannt, dass stationäre Gasturbinen zumeist mit Erdgas oder Heizöl - also höherkalorischen Brennstoffen - betrieben werden. Da derartige Gasturbinen in ihrer Konstruktion besonders aufwändig sind, besteht das Bestreben, bereits vorhandene Konstruktionspläne nur geringfügig zu modifizieren, wenn eine derartige Gasturbine mit einem niederkalorischen oder einem mittelkalorischen Brennstoff betrieben werden soll. Wegen des niedrigeren Heizwertes eines niederkalorischen oder mittelkalorischen Brennstoffs ergeben sich sehr hohe Brennstoffmassenströme, wenn die von der Gasturbine zu erbringende Leistung unverändert beibehalten werden soll. Dies hätte jedoch zur Folge, dass die Turbineneinheiten der Gasturbinen von einem größeren Turbinenmassenstrom durchströmt werden würden, wodurch dann der Verdichterenddruck signifikant ansteigen und der Verdichter weit abseits seines Auslegungspunkts betrieben werden würde. Insofern wurden bisher Maßnahmen zur Kompensation in Form von Massenstromverschiebungen eingeleitet, indem der zur Verbrennung vorgesehene Anteil des Verdichtermassenstroms in dem Maße reduziert wurde wie der Brennstoffmassenstrom aufgrund der Verwendung des niederkalorischen Brennstoffs zunahm.

Aus diesen Anforderungen heraus wurden häufig Kraftwerksanlagen konzipiert, bei denen eine ursprünglich für hochkalorische Brennstoffe konzipierte Gasturbine mit Synthesegas betrieben werden kann, indem sogenannte teilintegrierte Kohlevergasungsanlagen gemeinsam mit der Gasturbine betrieben werden. Dabei wird ein Teil des von der Gasturbine angesaugten Luftmassenstroms nach der Verdichtung der Gasturbine entnommen und einer Luftzerlegungsanlage zugeführt, um den für die Vergasung der Kohle erforderlichen reinen Sauerstoff bereitstellen zu können. Durch die so erreichte Verringerung der der Brennkammer zugeführten Luftmenge konnten größere Mengen an niederkalorischem Brennstoff verbrannt werden, ohne das eine Veränderung der damit zuführbaren thermischen Energie in Bezug auf eine geringere Menge an kochkalorischem Brennstoff auftritt und ohne dass der Verdichter angepasst werden musste. Somit konnten die höheren Brennstoffmassenströme aufgrund des niederkalorischen Brennstoffs kompensiert werden, so dass der Turbinenmassenstrom trotz der Verwendung des Synthesegases im Wesentlichen demjenigen Massenstrom entspricht, welcher der Gasturbine bei hochkalorischem Brennstoff und dem gesamten Ansaugmassenstroms des Verdichters (abgesehen von dem entnommenen Sekundärluftmassenstrom) durchströmt werden würde.

Weiter ist bekannt, dass zur Emissionsreduzierung im Teillastbetrieb ein Anteil des Verdichtermassenstroms währenddessen mit Hilfe der Abblaseleitungen in den Abgaskanal der Gasturbine ausgeblasen werden kann. Nachteil dieser Maßnahme ist jedoch die signifikante Verringerung des Wirkungsgrads der Gasturbine, da die abgeblasene Luft zuerst aufwändig verdichtet und anschließend ungenutzt in den Abgaskanal der Gasturbine entlassen wird.

Aufgabe der Erfindung ist die Bereitstellung eines Verfahrens zum Betrieb einer stationären Gasturbine, bei welchem einer in der Regel für hochkalorische Brennstoffe hauptsächlich konzipierte Gasturbine mit möglichst wenig planerischen Modifikationen zum Betrieb mit einem niederkalorischen oder mittelkalorischen Brennstoff ertüchtigt wird, ohne dass eine Vollintegration oder Teilintegration der Gasturbine in eine Kohlevergasungsanlage erforderlich ist. Weitere Aufgabe der Erfindung ist die Bereitstellung einer derartigen Gasturbine. Die auf das Verfahren gerichtete Aufgabe wird gelöst mit einem Verfahren gemäß den Merkmalen von Anspruch 1. Die auf die Vorrichtung gerichtete Aufgabe wird mit einer Gasturbine gemäß den Merkmalen von Anspruch 4 gelöst. Vorteilhafte Ausgestaltungen der Vorrichtung und des Verfahrens sind in den jeweiligen Unteransprüchen angegeben. Soweit nichts anderes angegeben ist, sind die Merkmale unterschiedlicher Unteransprüche in beliebiger Weise miteinander kombinierbar. Erfindungsgemäß ist vorgesehen, dass während des Betriebs der Gasturbine, bei dem Brennstoff mit verdichteter Luft verbrannt wird, unabhängig von der abgefragten Last - also während des Nenn- und Teillastbetriebs - beiden Kühlluftstufen Kühlluft mit im Wesentlichen gleichem Druck zugeführt wird. Bezogen auf die Gasturbine ist deswegen vorgesehen, dass die Gasturbine zumindest einen Brenner für mittelkalorische oder niederkalorische Brennstoffe aufweist und das die mindestens beiden Kühlluftstufen mit einer gemeinsamen Kühlluftquelle dauerhaft, d. h. nicht umschaltbar, verbunden sind.

Die Erfindung wendet sich somit von den bekannten Maßnahmen ab. Eine Abblasung der überschüssigen Verdichterendluft in den Abgaskanal ist nicht vorgesehen. Die überschüssige Verdichterendluft wird in den Heißgaskanal der Gasturbine eingebracht, indem diese zuerst zur Kühlung von offen gekühlten Turbinenbauteilen eingesetzt wird und anschließend aufgrund der offenen Kühlung in den Heißgaskanal der Turbine entweichen kann. Im Stand der Technik wird für jede Kühlluftstufe ein individueller, stets möglichst niedriger Kühlluftdruck bereitgestellt, um die Kühlluftmenge soweit wie möglich zu reduzieren. Erfindungsgemäß ist nun vorgesehen, dass in einer der beiden Kühlluftstufen jedoch absichtlich ein wesentlich höherer Kühlluftdruck der betreffenden Kühlluftstufe bereitgestellt wird, um eine größtmögliche Druckdifferenz zu erreichen. Insofern schlägt die Erfindung das Gegenteil von der bekannten, bisher angestrebten Vorgehensweise vor. Wenn derartige Gasturbinen dauerhaft mit einer einzigen Art von Brennstoff betrieben werden, ist bei einer Gasturbine, welche für den Einsatz eines mittelkalorischen oder niederkalorischen Brennstoffs vorgesehen ist, eine Umschaltung der beiden Kühlluftstufen zwischen Kühlluftquellen mit unterschiedlichen Versorgungsdrücken nicht erforderlich. Aus diesem Grunde sind die Kühlluftstufen dauerhaft mit einer gemeinsamen Kühlluftquelle - vorzugsweise dem Verdichterende - verbunden.

Ein weiterer Aspekt des erfindungsgemäßen Verfahrens ist, dass nicht nur während des Teillastbetriebs der Gasturbine den beiden Kühlluftstufen Kühlluft mit im Wesentlichen gleichem Druck zugeführt wird. Insbesondere auch während des Nennlastbetriebs der Gasturbine wird den Kühlluftstufen Kühlluft mit im Wesentlichen gleichem Druck zugeführt. Mit Hilfe dieser Maßnahme wird gewährleistet, dass für jeden Lastpunkt der Gasturbine stets eine ausreichende Menge des angesaugten Verdichtermassenstroms entnommen wird, um den durch die Brennkammer geführten Anteil des Verdichtermassenstroms so weit zu reduzieren, wie es aufgrund der Verwendung des niederkalorischen oder mittelkalorischen Brennstoffs mit dem erhöhten Volumenstrom an Brennstoff erforderlich ist.

Mit Hilfe der vorgeschlagenen Merkmale ist es möglich, Gasturbinen, deren Strömungspfade im Verdichter und in der Turbineneinheit prinzipiell für die Verwendung eines hochkalorischen Brennstoffs konzipiert und aufeinander abgestimmt worden sind, auch zu verwenden für den Betrieb mit einem mittelkalorischen oder niederkalorischen Brennstoff. Dies verringert signifikant Kosten bei der Entwicklung von Gasturbinen für niederkalorische oder mittelkalorische Brennstoffe, da einzelne Bauteile wie Verdichterschaufeln und Turbinenschaufeln sowie auch die Brennkammer von Gasturbinen als identische Bauteile ausgestaltet sein können, unabhängig davon, mit welchem Typ von Brennstoff die Gasturbine später betrieben werden soll.

Dabei wird unter dem Begriff "Kühlluftstufen" zumindest zwei derjenigen axialen Abschnitte der Turbineneinheit verstanden, welchen ansonsten - bei einer Gasturbine für hochkalorischen Brennstoff - innerhalb des betreffenden Abschnitts Kühlluft mit identischem Versorgungsdruck und in Bezug auf axial benachbarte Abschnitte Kühlluft mit unterschiedlichen Versorgungsdrücken zugeführt wird.

Weitere Vorteile und Merkmale der Erfindung sind in den Unteransprüchen angegeben.

Vorzugsweise wird den betreffenden Kühlluftstufen jeweils Verdichterendluft zugeführt. Da es Ziel der erfindungsgemäßen Maßnahme ist, einen größeren Anteil der angesaugten Verdichterendluft nicht durch die Brennkammer zu führen, sondern unmittelbar hinter der ersten Leitschaufelreihe in den Heißgaskanal der Gasturbine - also möglichst nahe hinter dem das Schluckvermögen der Gasturbine definierenden Querschnitt - einzubringen, bietet es sich an, diejenige Verdichterluft zu verwenden, welche den höchsten zur Verfügung stehenden Druck aufweist. Hierbei handelt es sich um Verdichterendluft.

Besonders vorteilhaft ist das Verfahren, bei dem einer ersten weiteren Kühlluftstufe Kühlluft mit einem Druck zugeführt wird, der wesentlich größer ist als derjenige Druck im Heißgas, der an derjenigen Stelle eines Heißgaskanals auftritt, an dem die Kühlluft der ersten weiteren Kühlluftstufe in den Heißgaskanal ausgeblasen wird.

Zweckmäßigerweise weisen alle Brenner eine mittelkalorische bzw. niederkalorische Brennstoffstufe auf.

Weitere Vorteile und Merkmale der Erfindung werden in dem nachfolgenden Ausführungsbeispiel der Erfindung näher angegeben.

Es zeigen:

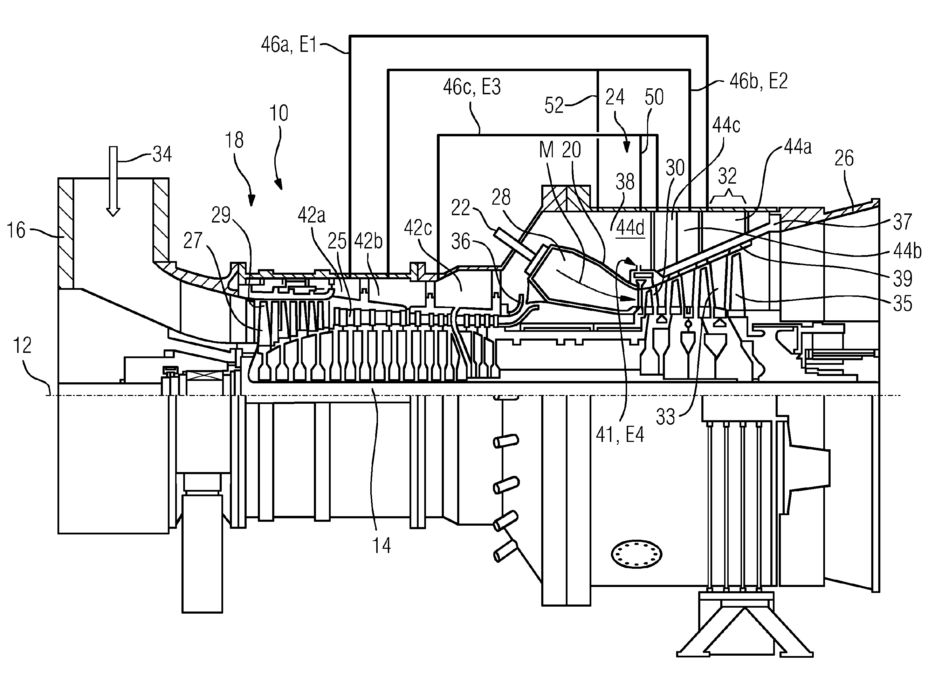

- FIG 1: einen schematischen Längsschnitt durch eine Gasturbine mit einem vierstufigen Kühlluftsystem.

Figur 1 zeigt eine stationäre Gasturbine 10 in einem Längsteilschnitt. Die Gasturbine 10 weist im Innern einen um eine Rotationsachse 12 drehgelagerten Rotor 14 auf, der auch als Turbinenläufer bezeichnet wird. Entlang des Rotors 14 folgen aufeinander ein Ansauggehäuse 16, ein Axialturboverdichter 18, eine torusartige Ringbrennkammer 20 mit mehreren rotationssymmetrisch zueinander angeordneten Brennern 22, eine Turbineneinheit 24 und ein Abgasgehäuse 26. Anstelle der Ringbrennkammer 20 könnte die Gasturbine 10 auch mehrere Rohrbrennkammern aufweisen.

Der Axialturboverdichter 18 umfasst einen ringförmig ausgebildeten Verdichterkanal 25 mit darin kaskadisch aufeinanderfolgenden Verdichterstufen aus Laufschaufel- und Leitschaufelkränzen. Die am Rotor 14 angeordneten Laufschaufeln 27 liegen mit ihren frei endenden Schaufelblattspitzen 29 einer äußeren Kanalwand des Verdichterkanals 25 gegenüber. Der Verdichterkanal 25 endet über einen Verdichterausgangsdiffusor 36 in einem Plenum 38. Darin ist die Ringbrennkammer 20 mit ihrem Verbrennungsraum 28 vorgesehen, der mit einem ringförmigen Heißgaskanal 30 der Turbineneinheit 24 kommuniziert. In der Turbineneinheit 24 sind vier hintereinander geschaltete Turbinenstufen 32 angeordnet. Am Rotor 14 ist ein Generator oder eine Arbeitsmaschine (jeweils nicht dargestellt) angekoppelt.

Im Betrieb der Gasturbine 10 saugt der Axialturboverdichter 18 durch das Ansauggehäuse 16 als zu verdichtendes Medium Umgebungsluft 34 an und verdichtet diese. Die verdichtete Luft wird durch den Verdichterausgangsdiffusor 36 in das Plenum 38 geführt, von wo aus es in die Brenner 22 einströmt. Über die Brenner 22 gelangt auch Brennstoff in den Verbrennungsraum 28. Dort wird der Brennstoff unter Zugabe der verdichteten Luft zu einem Heißgas M verbrannt. Das Heißgas M strömt anschließend in den Heißgaskanal 30, wo es sich arbeitsleistend an den Turbinenschaufeln der Turbineneinheit 24 entspannt. Die währenddessen freigesetzte Energie wird vom Rotor 14 aufgenommen und einerseits zum Antrieb des Axialturboverdichters 18 und andererseits zum Antrieb einer Arbeitsmaschine oder elektrischen Generators genutzt.

Üblicherweise umfasst der Verdichter 18 mehrere äußere Entnahmen zur Entnahme für Kühlluft unterschiedlichen Drucks. Im dargestellten Ausführungsbeispiel weist der Verdichter 18 drei derartige Entnahmen 42a, 42b, 42c auf. Diese Entnahmen 42a, 42b, 42c sind jeweils mit nur schematisch dargestellten Rohrleitungen 46a, 46b, 46c verbunden, durch welche die dem Verdichter 18 entnommene Luft unterschiedlichen Kühlluftstufen 44a, 44b, 44c zuführbar ist. Im dargestellten Ausführungsbeispiel weist die Turbineneinheit 24 vier Kühlluftstufen 44a - 44d auf, von denen drei an das Rohrleitungssystem, welches auch als Sekundärluftsystem bezeichnet wird, angeschlossen sind. Die vierte Kühlluftstufe 44d ist mit dem Plenum 38 durch innerhalb des Gehäuses angeordnete Versorgungskanäle 41 verbunden.

Gemäß dem gezeigten Ausführungsbeispiel sind in der Turbineneinheit 24 insgesamt vier Turbinenstufen 32 angeordnet, wobei jede Turbinenstufe 32 einen Kranz aus Turbinenleitschaufeln 33 umfasst, denen - in Strömungsrichtung des Heißgases M gesehen - stromab ein Kranz aus am Rotor 14 angeordneten Laufschaufeln 35 folgt. Den Spitzen der Laufschaufeln 35 gegenüberliegend sind an einem Turbinenleitschaufelträger 37 befestigte Segmente 39 eines sogenannten Führungsrings angeordnet. Diese Segmente 39 begrenzen im jeweiligen axialen Abschnitt den Heißgaskanal 30 radial außen und müssen somit ebenfalls mit Hilfe von Kühlluft gekühlt werden, genauso wie die einzelnen Turbinenschaufeln 33, 35.

Bei mit hochkalorischem Brennstoff betriebenen Gasturbinen gehört jede Kühlluftquelle - also die Entnahmen 42a-42c und das Verdichterende 36 -, die dazu gehörigen Verbindungskanäle - also die betreffenden Rohrleitungen 46a-46c bzw. den Versorgungskanal 41, und die jeweils dazu gehörigen Kühlluftsenken 44a-44d - also beispielsweise die Segmente 39 und Turbinenleitschaufeln 33 - zu einem der vier Kühlluftstränge E1 - E4. Beispielsweise können die Kühlluftstränge E1 bis E4 und somit die Kühlluftstufen 44a-44d den vier Turbinenstufen 32 1:1 zugeordnet sein.

Bei mit hochkalorischem Brennstoff betriebenen Gasturbinen sind die Entnahmen 42 von Kühlluft am Verdichter 18 so positioniert, dass dort ein Anteil an verdichteter Luft mit einem derartig hohen Druck entnommen werden kann, dass dieser lediglich geringfügig größer ist als derjenige Druck im Heißgas M, der an der Stelle auftritt, an dem die jeweilig entnommene Kühlluft - unter Berücksichtigung der Druckverluste innerhalb des Rohrleitungssystems und der zu kühlenden Bauteile - in den Heißgaskanal 30 eingespeist wird.

Die in FIG 1 dargestellten Brenner 22 umfassen zumindest eine Brennstoffstufe für einen niederkalorischen oder mittelkalorischen Brennstoff. Vorzugsweise ist die Gasturbine 10 zum Betrieb mit einem Synthesegas ausgebildet. Um nun die ursprünglich für hochkalorische Brennstoffe konzipierte und ausgelegte Gasturbine auch mit möglichst geringen konstruktiven Veränderungen zu fertigen und mit einem mittel- oder niederkalorischen Brennstoff betreiben zu können, ist vorgesehen, dass mindestes eine zweite Kühlluftstufe 44c, wenn nicht sogar jede weitere Kühlluftstufe 44c - 44a mit Verdichterendluft versorgt wird, unabhängig von der von der Gasturbine 10 zu erbringenden Leistung.

Hierzu ist eine erste, das Plenum 38 mit dem Kühlluftstrang E3 strömungstechnisch koppelnde Verbindung 50 vorgesehen, so dass neben der ersten Turbinenstufe auch der zweiten Turbinenstufe Kühlluft in Form von Verdichterendluft zugeführt wird. Ergänzend ist es möglich, dass eine weitere Verbindung 52 das Plenum 38 mit dem zweiten Kühlluftstrang E2 verbindet. Im Vergleich zum Stand der Technik wird somit die zweite Turbinenstufe mit einem wesentlich höheren Versorgungsdruck bespeist, so dass der Differenzdruck an der Ausblasstelle der Kühlluft im Heißgaskanal 30 wesentlich größer ist als der bisher möglichst, aber dennoch ausreichend klein gehaltene Differenzdruck. Durch den hohen Differenzdruck strömt eine wesentlich vergrößerte Kühlluftmenge durch die entsprechende Kühlluftstufe 44c, was den Anteil von Verdichterluft, welcher durch die Brennkammer 20 strömt, signifikant reduziert. Die Reduzierung dieser Luftmenge führt dazu, dass eine größere Menge an Brennstoff, vorzugsweise an mittelkalorischen oder niederkalorischen Brennstoff, durch das Brennstoffsystem den Brennern 22 der Gasturbine 10 zugeführt werden kann, ohne dass sich der Massenstrom am Turbineneintritt verändert, verglichen mit einer Gasturbine, die keine derartige Parallelschaltung von Kühlluftstufen 44 aufweist und die mit einem hochkalorischen Brennstoff betrieben wird.

Da während des Nenn- und Teillastbetriebs der Gasturbine 10 zumindest zwei der Kühlluftstufen 44d, 44c Kühlluft mit im wesentlichen gleichen Druck zugeführt wird, ist es nicht mehr erforderlich, dass zwischen unterschiedlichen Kühlluftquellen umgeschaltet werden muss. Aus diesem Grunde sind die mindestens zwei Kühlluftstufen 44d, 44c mit einer gemeinsamen Kühlluftquelle dauerhaft verbunden. Die Entnahmen 42c und ggf. die Entnahme 42b und die Rohrleitungen zu den Verbindungen 50 bzw. 52 können dann entfallen.

Insgesamt betrifft die Erfindung ein Verfahren zum Betrieb einer stationären Gasturbine 10 mit einem niederkalorischen Brennstoff und/oder mittelkalorischen Brennstoff, vorzugsweise Synthesegas, wobei die Gasturbine 10 ein Sekundärluftsystem mit mindestens zwei Kühlluftstufen 44 zur offenen Kühlung von Turbinenbauteilen in Form von Turbinenleitschaufeln 33, Turbinenlaufschaufeln 35 und/oder Segmenten 39 eines Führungsrings aufweist, mit dem Schritt: Verbrennen des Brennstoffs mit verdichteter Luft. Um eine Gasturbine 10 anzugeben, die weitestgehend auf einer für hochkalorische Brennstoffe konstruierten Gasturbine basiert, und dennoch möglichst geringe konstruktive Änderungen gegenüber dieser aufweist, wird vorgeschlagen, das während des Nenn- und Teillastbetriebs der Gasturbine 10 den mindestens zwei Kühlluftstufen 44d, 44c Kühlluft mit im Wesentlichen gleichen Druck zugeführt wird. Eine stationäre Gasturbine 10 zur Durchführung des Verfahrens kennzeichnet sich dadurch, dass zumindest einer der Brenner eine mittelkalorische oder niederkalorische Brennstoffstufe aufweist und die mindestens zwei Kühlluftstufen mit einer gemeinsamen Kühlluftmenge dauerhaft - nicht umschaltbar - miteinander verbunden sind.

## Patentansprüche

1. Verfahren zum Betrieb einer stationären Gasturbine (10) mit einem niederkalorischen Brennstoff und/oder mittelkalorischen Brennstoff, vorzugsweise Synthesegas, wobei die Gasturbine (10) ein Sekundärluftsystem mit mindestens zwei Kühlluftstufen (44d, 44c) zur offenen Kühlung von Turbinenbauteilen aufweist,
mit dem Schritt:
Verbrennen des Brennstoffs mit verdichteter Luft, **gekennzeichnet dadurch, dass**
während des Nenn- und Teillastbetriebs der Gasturbine (10) beiden Kühlluftstufen (44d, 44c) Kühlluft mit im Wesentlichen gleichen Druck zugeführt wird.

2. Verfahren nach Anspruch 1,
bei dem den betreffenden Kühlluftstufen (44d, 44c) jeweils Verdichterendluft zugeführt wird.

3. Verfahren nach Anspruch 1 oder 2,
bei dem einer ersten weiteren Kühlluftstufe (44d, 44c, 44b) Kühlluft mit einem Druck zugeführt wird, der wesentlich größer ist als derjenige Druck im Heißgas (M), der an derjenigen Stelle eines Heißgaskanals (30) auftritt, an dem die Kühlluft der ersten weiteren Kühlluftstufe in den Heißgaskanal (30) ausgeblasen wird.

4. Stationäre Gasturbine (10),
umfassend
- einen Verdichter (18),
- eine Brennkammer (20) oder mehrere Brennkammern mit jeweils einem oder mehreren Brennern (22),
- eine Turbineneinheit (24) und
- ein mindestens zwei Kühlluftstufen (44d, 44c) umfassendes Sekundärluftsystem zur offenen Kühlung von Turbinenbauteilen,
**dadurch gekennzeichnet, dass**
zumindest einer der Brenner (22) eine
mittelkalorische oder niederkalorische Brennerstufe aufweist und die mindestens beiden Kühlluftstufen (44d, 44c) mit einer gemeinsamen Kühlluftquelle dauerhaft verbunden sind.

5. Gasturbine (10) nach Anspruch 4,
bei dem alle Brenner (22) eine mittelkalorische bzw. niederkalorische Brennstoffstufe aufweisen.
